# FASCICULE DE BREVET EUROPEEN

(11) **EP 3 262 348 B1**
(45) Date de publication et mention de la délivrance du brevet: **01.04.2020**
(21) Numéro de dépôt: 16713957.5
(22) Date de dépôt: 23.02.2016
(51) Int. Cl.: F23R 3/04, F23R 3/06

(54) **CHAMBRE DE COMBUSTION DE TURBOMACHINE COMPORTANT UNE PIÈCE PÉNÉTRANTE AVEC OUVERTURE**
GASTURBINENBRENNKAMMER EINES TURBINENMOTORS MIT EINEM DURCHGANGSTEIL MIT EINER ÖFFNUNG
COMBUSTION CHAMBER OF A TURBINE ENGINE COMPRISING A THROUGH-PART WITH AN OPENING

(30) Priorité: 25.02.2015 FR 1551600
(43) Date de publication de la demande: 03.01.2018
(73) Titulaire: Safran Helicopter Engines, 64510 Bordes (FR)
(72) Inventeur: LAMAISON, Olivier, 77550 Moissy-Cramayel (FR); SAVARY, Nicolas, 77550 Moissy-Cramayel (FR)
(74) Mandataire: Brevalex
(86) Numéro de dépôt international: PCT/FR2016/050411
(87) Numéro de publication internationale: WO 2016/135409

(56) Documents cités:
- EP-A2- 0 841 520
- FR-A1- 2 826 102
- FR-A1- 3 009 747
- GB-A- 665 155

## Description

### DOMAINE TECHNIQUE

La présente invention se rapporte au domaine des turbomachines, et plus particulièrement au domaine général des chambres de combustion des turbomachines.

L'invention s'applique à tout type de turbomachines terrestres ou aéronautiques, et notamment aux turbomachines d'aéronef telles que les turboréacteurs et les turbopropulseurs.

Elle concerne plus précisément une chambre de combustion de turbomachine comportant une paroi munie d'une pièce pénétrante dans la chambre de combustion qui comporte une ouverture pour créer un flux d'air de refroidissement de la paroi, ainsi qu'une turbomachine comportant un compresseur et une telle chambre.

### ÉTAT DE LA TECHNIQUE ANTÉRIEURE

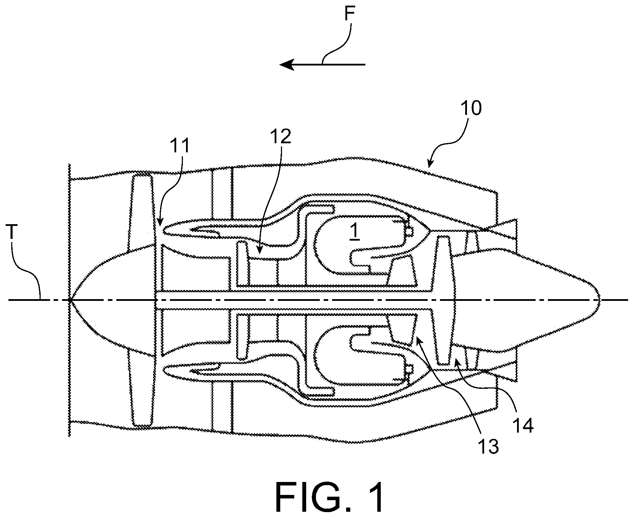

La figure 1 illustre un exemple typique de turbomachine 10 d'un type connu, par exemple un turboréacteur d'aéronef à double flux et à double corps.

La turbomachine 10 comprend, successivement selon la direction de poussée représentée par la flèche F qui correspond également à la direction générale d'écoulement des gaz dans le turboréacteur, un compresseur basse pression 11, un compresseur haute pression 12, une chambre annulaire de combustion 1, une turbine haute pression 13 et une turbine basse pression 14.

D'une manière bien connue, la chambre de combustion 1 est montée en aval du compresseur haute pression 12 destiné à alimenter cette chambre en air sous pression, et en amont de la turbine haute pression 13 destinée à entraîner en rotation le compresseur haute pression 12 sous l'effet de la poussée des gaz provenant de la chambre de combustion.

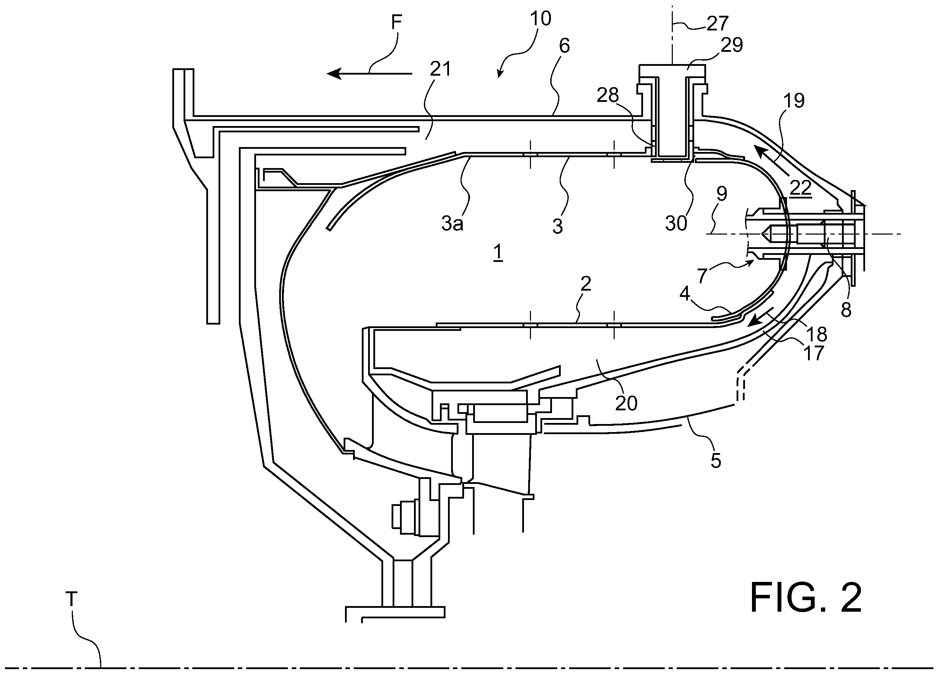

La figure 2 illustre à plus grande échelle la chambre de combustion 1 et son environnement immédiat.

La chambre de combustion 1 comprend deux parois annulaires coaxiales, respectivement radialement interne 2 et radialement externe 3, qui s'étendent autour de l'axe longitudinal T de la chambre de combustion 1.

Ces deux parois annulaires 2 et 3 sont fixées en aval à des carters interne 5 et externe 6 de la chambre 1, et sont reliées l'une à l'autre à leur extrémité amont par une paroi annulaire de fond de chambre 4.

La paroi annulaire de fond de chambre 4 comporte une rangée annulaire d'orifices régulièrement répartis autour de l'axe T de la chambre de combustion 1, et dans lesquels sont montés des systèmes d'injection 7 associés à une rangée annulaire d'injecteurs de carburant 8 présentant chacun un axe 9 d'émission de carburant.

Chaque système d'injection 7 comporte des orifices destinés à l'injection, dans la chambre de combustion 1, d'une partie du flux d'air provenant du diffuseur (non représenté) monté en sortie du compresseur haute pression 12 de la turbomachine 10.

Par ailleurs, les parois annulaires 2 et 3 de la chambre de combustion 1 sont reliées à leur extrémité amont à un carénage annulaire 17 comportant des orifices alignés avec les systèmes d'injection 7 pour le passage des injecteurs 8 et de l'air alimentant les systèmes d'injection 7. Ce carénage 17 a pour fonctions principales la protection de la paroi de fond de chambre 4 et le guidage de parties 18 et 19 du flux d'air provenant du diffuseur qui circulent vers l'aval respectivement le long des parois annulaires interne 2 et externe 3 de la chambre de combustion 1, au sein de deux espaces de contournement respectivement interne 20 et externe 21. Ces parties 18 et 19 du flux d'air sont respectivement dénommées « flux d'air de contournement interne » et « flux d'air de contournement externe ». Les espaces de contournement interne 20 et externe 21 forment, avec un espace amont 22 qui les raccorde l'un à l'autre, une enceinte dans laquelle s'étend la chambre de combustion 1.

Par ailleurs, la paroi annulaire radialement externe 3 comporte un orifice 30 de passage de bougie, présentant un axe 27, et muni d'une douille 28 de refroidissement dans laquelle s'étend une bougie d'allumage 29 montée sur le carter externe 6 et destinée à initier la combustion du mélange d'air et de carburant au démarrage de la turbomachine. En variante, l'orifice 30 de passage de bougie pourrait également être situé sur la paroi de fond de chambre 4 ou sur la paroi annulaire radialement interne 2.

La température interne de la chambre de combustion 1 est telle qu'il est souvent nécessaire de créer un film d'air de refroidissement entre la flamme et la paroi radialement externe 3 de la chambre afin d'augmenter significativement sa durée de vie.

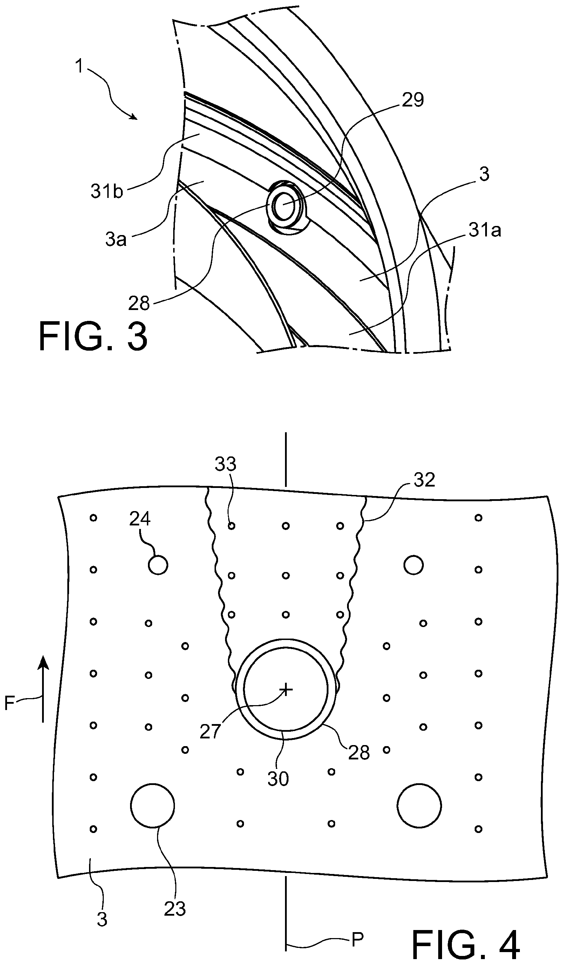

Pour se faire, la surface interne 3a de la paroi radialement externe 3 peut être équipée de languettes longitudinales 31a, 31b permettant de générer un film d'air, comme le montre la figure 3 qui est une vue partielle en perspective de l'intérieur d'une chambre de combustion 1 telle que celle des figures 1 et 2.

Cependant, dans certains cas, il est possible que des obstacles, tels que la douille 28 de refroidissement de la bougie d'allumage 29 représentée sur les figures 2 et 3, viennent interrompre brutalement ce film d'air protecteur. Alors, la température en aval de la douille de refroidissement 28 n'est plus homogène et la douille de refroidissement 28 génère un sillage chaud 32 au sein du flux d'air de contournement externe 19, comme l'illustre la figure 4.

Bien entendu, d'autres types d'éléments pénétrant dans la chambre de combustion 1, autres qu'une douille de refroidissement, peuvent représenter des obstacles à l'écoulement du film d'air protecteur, par exemple tels que des axes de fixation ou des injecteurs de démarrage.

Le sillage 32 peut alors entraîner des gradients de température très importants, de l'ordre de plusieurs centaines de degrés Celsius, sur une distance très faible, de l'ordre de quelques millimètres. Cela peut alors se traduire par un amoindrissement de la durée de vie de la paroi radialement externe 3.

Ce sillage 32 se développe vers l'aval en étant centré par rapport à un plan axial P médian de l'orifice 30 de passage de bougie, dans le cas où le flux d'air provenant du diffuseur fourni par le compresseur haute pression 12 s'écoule vers l'aval sensiblement sans composante giratoire.

En revanche, dans le cas où le flux d'air fourni par le compresseur haute pression 12 s'écoule vers l'aval de manière hélicoïdale, c'est-à-dire avec une composante giratoire, le sillage 32 se développe vers l'aval globalement selon une direction inclinée par rapport au plan axial P médian de l'orifice 30 de passage de bougie.

Il est à noter que par « plan axial », il faut comprendre un plan passant par l'axe T (voir figure 2) de la chambre de combustion 1, qui se confond avec l'axe de la turbomachine. Il est à noter que le plan P correspond au plan de section de la figure 2.

Dans tous les cas, le sillage 32 se traduit par une dépression dans la région du flux d'air de contournement externe 19 occultée par la douille de refroidissement 28 de bougie.

Compte-tenu de la présence d'un tel sillage 32 sur la paroi radialement externe 3, il est nécessaire de refroidir localement la zone en aval de la douille de refroidissement 28 par reconstitution d'un film air.

Des solutions ont été proposées visant, dans certaines configurations, à ajouter une multitude de micro-perforations 33 (multi-perçage) visant à refroidir la zone aval de la douille de refroidissement 28. Dans l'exemple de la figure 4, ces micro-perforations 33 sont réparties sensiblement sur toute la surface de la paroi radialement externe 3 et sont destinées à créer un film d'air de refroidissement le long de cette paroi 3 au sein de la chambre de combustion 1. Pour des raisons de clarté, ces micro-perforations 33 sont représentées plus grandes et réparties selon une densité moindre que dans la réalité.

Néanmoins, l'ajout de telles micro-perforations 33 impose de réaliser des opérations supplémentaires lors de la fabrication. De plus, le film d'air reconstitué par le biais des micro-perforations 33 n'a pas le même flux aérodynamique qu'un film d'air généré à l'aide des languettes longitudinales 31a, 31b.

FR 2 826 102 A1, GB 665,155 A et EP 0841520 A1 décrivent d'autres exemples de parois de chambre de combustion selon l'art antérieur.

### EXPOSÉ DE L'INVENTION

Il existe ainsi un besoin pour proposer une solution alternative de refroidissement d'une paroi de chambre de combustion de turbomachine afin d'augmenter sa durée de vie, en réduisant au mieux les gradients de température et les points chauds locaux.

L'invention a pour but de remédier au moins partiellement aux besoins mentionnés ci-dessus et aux inconvénients relatifs aux réalisations de l'art antérieur.

L'invention a ainsi pour objet, selon l'un de ses aspects, une chambre de combustion de turbomachine, comportant au moins une paroi, notamment annulaire ou torique, délimitant la chambre de combustion et comportant un orifice de passage d'une pièce pénétrante dans la chambre de combustion, caractérisée en ce que la pièce pénétrante comporte, dans sa partie située à l'intérieur de la chambre de combustion, au moins une ouverture capable de créer un film d'air de refroidissement de la zone en aval de la pièce pénétrante.

Grâce à l'invention, il peut être possible de permettre un refroidissement efficace de la paroi de la chambre de combustion de turbomachine par la création d'un film d'air en aval de la pièce pénétrante. De cette façon, il peut être possible également de limiter l'apparition de sillages chauds sur la paroi de la chambre de combustion en aval de la pièce pénétrante. L'invention peut ainsi permettre d'augmenter significativement la durée de vie de la chambre de combustion. De plus, l'invention peut être mise en œuvre de manière simple, en évitant l'ajout d'opérations et/ou de composants supplémentaires sur la chambre de combustion. Le film d'air peut en effet être recréé par le simple ajout d'une ouverture sur la pièce pénétrante à faible valeur ajoutée. En outre, la solution de l'invention peut permettre de recréer un film d'air sensiblement équivalent en termes de flux aérodynamique au film d'air généré par la ou les languettes telles que décrites précédemment.

La chambre de combustion selon l'invention peut en outre comporter l'une ou plusieurs des caractéristiques suivantes prises isolément ou suivant toutes combinaisons techniques possibles.

Ladite au moins une ouverture de la pièce pénétrante peut être par exemple réalisée par usinage.

De façon préférée, ladite au moins une ouverture de la pièce pénétrante correspond à une fente réalisée sur la surface de la pièce pénétrante, notamment de forme oblongue.

Par ailleurs, ladite au moins une ouverture de la pièce pénétrante peut s'étendre longitudinalement le long du pourtour annulaire de la pièce pénétrante, notamment sur au moins un quart du pourtour annulaire de la pièce pénétrante.

Ladite au moins une ouverture de la pièce pénétrante peut être formée sensiblement à l'extrémité radialement interne de la pièce pénétrante.

En outre, ladite au moins une ouverture de la pièce pénétrante peut s'étendre sensiblement parallèlement à la direction du flux d'air de refroidissement qui l'alimente.

Ladite au moins une paroi peut comporter la paroi annulaire radialement externe de la chambre de combustion. Ladite au moins une paroi peut encore comporter la paroi annulaire radialement interne de la chambre de combustion. Ladite au moins une paroi peut également comporter la paroi annulaire de fond de chambre.

Par ailleurs, la surface interne de ladite au moins une paroi peut comporter au moins une languette apte à générer un film d'air de refroidissement de ladite au moins une paroi, et notamment deux languettes s'étendant sensiblement parallèlement entre elles, la pièce pénétrante étant située entre les deux languettes.

De plus, ladite au moins une paroi peut comporter une pluralité de micro-perforations pour permettre une entrée d'air de refroidissement dans la chambre de combustion pour le refroidissement de ladite au moins une paroi.

La pièce pénétrante peut être tout type d'élément pénétrant dans la chambre de combustion et constituant ainsi un obstacle à l'écoulement d'un film d'air protecteur. Il peut notamment s'agir d'un axe de fixation ou d'un injecteur de démarrage. Toutefois, de façon préférentielle, la pièce pénétrante est une douille de refroidissement de bougie d'allumage.

Par ailleurs, l'invention a également pour objet, selon un autre de ses aspects, une turbomachine, caractérisée en ce qu'elle comporte un compresseur, notamment un compresseur haute pression, et une chambre de combustion telle que définie précédemment, disposée dans une enceinte annulaire agencée en sortie du compresseur, et dans laquelle une partie d'un flux d'air issu du compresseur est destinée à contourner la chambre de combustion le long de ladite au moins une paroi.

La chambre de combustion et la turbomachine selon l'invention peuvent comporter l'une quelconque des caractéristiques précédemment énoncées, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :
- la figure 1 est une vue, en coupe axiale, d'une turbomachine d'un type connu,
- la figure 2 est une demi-vue, en coupe axiale, d'une chambre annulaire de combustion de la turbomachine de la figure 1,
- la figure 3 est une vue partielle en perspective de l'intérieur d'une chambre de combustion telle que celle représentée sur les figures 1 et 2,
- la figure 4 est une vue de dessus d'une paroi annulaire radialement externe de la chambre de combustion de la figure 2,

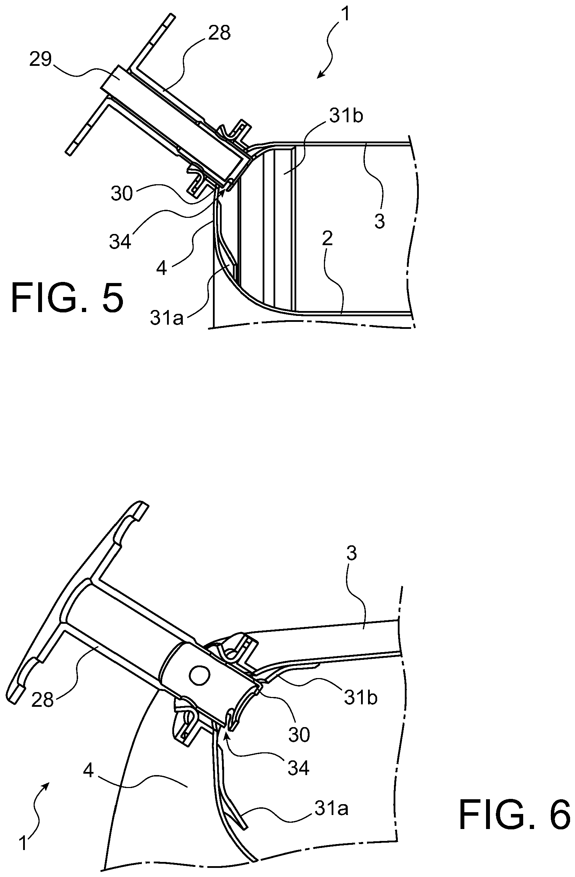

- la figure 5 est une demi-vue en coupe partielle d'une chambre de combustion annulaire de turbomachine selon un exemple de réalisation de l'invention, la douille de refroidissement étant représentée en coupe,
- la figure 6 est une autre vue en coupe et en perspective de la chambre annulaire de combustion de la figure 5, la douille de refroidissement étant représentée en perspective et en coupe, la bougie n'étant pas représentée, et

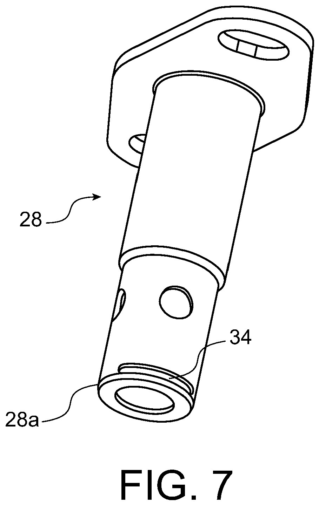

- la figure 7 représente en perspective, de façon isolée, la douille de refroidissement située entre la paroi radialement externe et la paroi de fond de chambre de la chambre de combustion des figures 5 et 6.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

Dans toute la description, il est noté que les termes amont et aval sont à considérer par rapport à une direction principale F d'écoulement normal des gaz (de l'amont vers l'aval) pour une turbomachine 10. Par ailleurs, on appelle axe T de la turbomachine 10, l'axe de symétrie radiale de la turbomachine 10. La direction axiale de la turbomachine 10 correspond à la direction de l'axe T de la turbomachine 10. Une direction radiale de la turbomachine 10 est une direction perpendiculaire à l'axe T de la turbomachine 10. En outre, sauf précision contraire, les adjectifs et adverbes axial, radial, axialement et radialement sont utilisés en référence aux directions axiale et radiale précitées. De plus, sauf précision contraire, les termes intérieur et extérieur sont utilisés en référence à une direction radiale de sorte que la partie intérieure d'un élément est plus proche de l'axe T de la turbomachine 10 que la partie extérieure du même élément.

De plus, dans la description qui va suivre, on considère que la pièce pénétrante 28 est une douille de refroidissement 28 de bougie d'allumage 29. Ce choix n'est bien entendu aucunement limitatif, la pièce pénétrante 28 pouvant être tout élément pénétrant dans la chambre de combustion 1 et constituant un obstacle à l'écoulement d'un film d'air protecteur, tel qu'un axe de fixation ou un injecteur de démarrage.

En outre, la paroi 3 délimitant la chambre de combustion 1 et comportant un orifice 30 de passage de la pièce pénétrante 28 est préférentiellement constituée par la paroi annulaire radialement externe 3 de la chambre de combustion 1. Toutefois, cette paroi peut également être constituée par la paroi annulaire de fond de chambre 4 ou la paroi annulaire radialement interne 2 de la chambre de combustion 1.

Les figures 1 à 4 ont déjà été décrites précédemment dans la partie relative à l'état de la technique antérieure.

On a par ailleurs illustré en référence aux figures 5 à 7 un exemple de mode de réalisation d'une chambre de combustion 1 conforme à l'invention.

Plus précisément, les figures 5 et 6 sont des vues en perspective de la paroi annulaire radialement externe 3 et de la paroi de fond de chambre 4 de la chambre de combustion 1 de turbomachine, la douille de refroidissement 28 de la bougie 29 étant respectivement représentée en coupe et en perspective. De plus, la figure 7 représente, en perspective et de façon isolée, cette douille de refroidissement 28.

La chambre de combustion 1 est semblable à celle décrite précédemment en référence aux figures 1 à 4, la douille de refroidissement 28 étant toutefois modifiée conformément à l'invention afin d'améliorer l'efficacité du refroidissement de la paroi annulaire de fond de chambre 4, comme le montrent les figures 5 et 6, tandis que l'amélioration portait sur l'efficacité du refroidissement de la paroi annulaire radialement externe 3 pour l'exemple de la figure 2.

Ainsi, la paroi annulaire radialement externe 3 de la chambre de combustion 1 comporte un orifice 30 de passage de la douille de refroidissement 28 de la bougie d'allumage 29.

Conformément à l'invention, la douille de refroidissement 28 comporte, dans sa partie située à l'intérieur de la chambre de combustion 1, une ouverture 34 capable de créer un film d'air de refroidissement de la zone en aval de la douille de refroidissement 28.

Comme on peut le voir sur les figures 5 à 7, cette ouverture 34 se présente sous la forme d'une fente de forme oblongue, usinée sur la surface de la douille de refroidissement 28 au niveau de son extrémité radialement interne 28a.

Cette fente 34 permet de créer un film d'air en aval de la douille de refroidissement 28 et de la bougie d'allumage 29, de sorte à empêcher, ou du moins limiter, la formation de sillages chauds tels que décrits précédemment et à pouvoir donc augmenter la durée de vie de la chambre de combustion 1.

Par ailleurs, comme on peut le voir sur les figures 5 et 6, la fente 34 de la douille de refroidissement 28 s'étend longitudinalement le long du pourtour annulaire de la douille de refroidissement 28, sur au moins un quart de celui-ci. De plus, cette fente 34 s'étend sensiblement parallèlement à la direction du flux d'air de refroidissement qui l'alimente.

En outre, comme il est représenté sur les figures 5 et 6, la surface interne de la paroi radialement externe 3 et la surface interne du fond de chambre 4 comportent respectivement une languette longitudinale 31b et 31a, parallèles entre elles et entre lesquelles est située la douille de refroidissement 28 de la bougie d'allumage 29.

Bien entendu, l'invention n'est pas limitée à l'exemple de réalisation qui vient d'être décrit. Diverses modifications peuvent y être apportées par l'homme du métier.

En particulier, de façon générale et comme indiqué précédemment, l'invention peut également être appliquée à une paroi annulaire radialement interne ou une paroi annulaire de fond de chambre de combustion lorsqu'une telle paroi est traversée par une bougie d'allumage ou tout autre élément pénétrant dans une chambre de combustion.

L'expression « comportant un » doit être comprise comme étant synonyme de « comportant au moins un », sauf si le contraire est spécifié.

## Revendications

1. Chambre de combustion (1) de turbomachine (10), comportant au moins une paroi (3) délimitant la chambre de combustion (1) et comportant un orifice (30) de passage d'une pièce pénétrante (28), ladite pièce pénétrante (28) comportant, dans sa partie située à l'intérieur de la chambre de combustion (1), au moins une ouverture (34) capable de créer un film d'air de refroidissement de la zone en aval de la pièce pénétrante (28), **caractérisée en ce que** la surface interne de ladite au moins une paroi (3) comporte deux languettes (31a, 31b) s'étendant sensiblement parallèlement entre elles, aptes à générer un film d'air de refroidissement de ladite au moins une paroi (3), la pièce pénétrante (28) étant située entre les deux languettes (31a, 31b).

2. Chambre de combustion selon la revendication 1, **caractérisée en ce que** ladite au moins une ouverture (34) de la pièce pénétrante (28) correspond à une fente réalisée sur la surface de la pièce pénétrante notamment de forme oblongue.

3. Chambre de combustion selon la revendication 1 ou 2, **caractérisée en ce que** ladite au moins une ouverture (34) de la pièce pénétrante (28) s'étend longitudinalement le long du pourtour annulaire de la pièce pénétrante (28), notamment sur au moins un quart du pourtour annulaire de la pièce pénétrante (28).

4. Chambre de combustion selon l'une des revendications précédentes, **caractérisée en ce que** ladite au moins une ouverture (34) de la pièce pénétrante (28) est formée sensiblement à l'extrémité radialement interne (28a) de la pièce pénétrante (28).

5. Chambre de combustion selon l'une quelconque des revendications précédentes, **caractérisée en ce que** ladite au moins une ouverture (34) de la pièce pénétrante (28) s'étend sensiblement parallèlement à la direction du flux d'air de refroidissement qui l'alimente.

6. Chambre de combustion selon l'une quelconque des revendications précédentes, **caractérisée en ce que** ladite au moins une paroi comporte la paroi annulaire radialement externe (3) de la chambre de combustion (1).

7. Chambre de combustion selon l'une quelconque des revendications précédentes, **caractérisée en ce que** ladite au moins une paroi comporte la paroi annulaire radialement interne (2) de la chambre de combustion (1).

8. Chambre de combustion selon l'une quelconque des revendications précédentes, **caractérisée en ce que** ladite au moins une paroi comporte la paroi annulaire de fond de chambre (4) de la chambre de combustion (1).

9. Chambre de combustion selon l'une quelconque des revendications précédentes, **caractérisée en ce que** ladite au moins une paroi (3) comporte une pluralité de micro-perforations (33) pour permettre une entrée d'air de refroidissement dans la chambre de combustion (1) pour le refroidissement de ladite au moins une paroi (3).

10. Chambre de combustion selon l'une quelconque des revendications précédentes, **caractérisée en ce que** ladite pièce pénétrante (28) est une douille de refroidissement (28) de bougie d'allumage (29).

11. Turbomachine (10), **caractérisée en ce qu'**elle comporte un compresseur (12), notamment un compresseur haute pression, et une chambre de combustion (1) selon l'une quelconque des revendications précédentes, disposée dans une enceinte annulaire (20, 21, 22) agencée en sortie du compresseur (12), et dans laquelle une partie (19) d'un flux d'air issu du compresseur (12) est destinée à contourner la chambre de combustion (1) le long de ladite au moins une paroi (3).

## Patentansprüche

1. Brennkammer (1) eines Turbinenmotors (10), die mindestens eine Wand (3) umfasst, welche die Brennkammer (1) begrenzt und einen Durchgang (30) zur Durchführung eines Durchgangsteil (28) umfasst, wobei das genannte Durchgangsteil (28) an dem Teilstück, das sich im Inneren der Brennkammer (1) befindet, mindestens eine Öffnung (34) umfasst, die geeignet ist, einen Kühlluftfilm in dem Bereich stromabwärts des Durchgangsteils (28) zu erzeugen, **dadurch gekennzeichnet, dass** die Innenfläche der genannten mindestens einen Wand (3) zwei Zungen (31a, 31b) umfasst, die im Wesentlichen parallel zueinander verlaufen und dazu geeignet sind, einen Kühlluftfilm an der genannten mindestens einen Wand (3) zu erzeugen, wobei das Durchgangsteil (28) zwischen den beiden Zungen (31a, 31b) angeordnet ist.

2. Brennkammer gemäß Anspruch 1, **dadurch gekennzeichnet, dass** die genannte mindestens eine Öffnung (34) des Durchgangsteils (28) einem in der Oberfläche des Durchgangsteils eingebrachten länglichen Schlitz entspricht.

3. Brennkammer gemäß Anspruch 1 oder 2, **dadurch gekennzeichnet, dass** die genannte mindestens eine Öffnung (34) des Durchgangsteils (28) entlang des ringförmigen Umfangs des Durchgangsteils (28) verläuft, und zwar mindestens über ein Viertel des ringförmigen Umfangs des Durchgangsteils (28).

4. Brennkammer gemäß einem der vorgenannten Ansprüche, **dadurch gekennzeichnet, dass** die genannte mindestens eine Öffnung (34) des Durchgangsteils (28) im Wesentlichen an der radial inneren Seite (28a) des Durchgangsteils (28) verläuft.

5. Brennkammer gemäß einem der vorgenannten Ansprüche, **dadurch gekennzeichnet, dass** die genannte mindestens eine Öffnung (34) des Durchgangsteils (28) im Wesentlichen parallel zur Strömungsrichtung des Kühlluftstroms verläuft, der sie durchströmt.

6. Brennkammer gemäß einem der vorgenannten Ansprüche, **dadurch gekennzeichnet, dass** die genannte mindestens eine Wand die ringförmige radial äußere Wand (3) der Brennkammer (1) umfasst.

7. Brennkammer gemäß einem der vorgenannten Ansprüche, **dadurch gekennzeichnet, dass** die genannte mindestens eine Wand die ringförmige radial innere Wand (2) der Brennkammer (1) umfasst.

8. Brennkammer gemäß einem der vorgenannten Ansprüche, **dadurch gekennzeichnet, dass** die genannte mindestens eine Wand die ringförmige Kammerbodenwand (4) der Brennkammer (1) umfasst.

9. Brennkammer gemäß einem der vorgenannten Ansprüche, **dadurch gekennzeichnet, dass** die genannte mindestens eine Wand (3) eine Vielzahl von Mikroperforationen (33) umfasst, damit Kühlluft zur Kühlung der genannten mindestens einen Wand (3) in die Brennkammer (1) eintreten kann.

10. Brennkammer gemäß einem der vorgenannten Ansprüche, **dadurch gekennzeichnet, dass** das genannte Durchgangsteil (28) eine Kühlhülse (28) einer Zündkerze (29) ist.

11. Turbinenmotor (10), **dadurch gekennzeichnet, dass** er einen Kompressor (12), und zwar einen Hochdruckkompressor, und eine Brennkammer (1) gemäß einem der vorgenannten Ansprüche umfasst, die in einer ringförmigen Umfassung (20, 21, 22) angeordnet ist, welche am Ausgang des Kompressors (12) angeordnet ist, und in der ein Teil (19) des Luftstroms aus dem Kompressor (12) dafür vorgesehen ist, entlang der genannten mindestens einen Wand (3) die Brennkammer (1) zu umströmen.

## Claims

1. A combustion chamber (1) of a turbine engine (10), comprising at least one wall (3) defining the combustion chamber (1) and comprising an aperture (30) for enabling a through-part (28) to pass therethrough, said through-part (28) comprising, in the portion thereof located within the combustion chamber (1), at least one opening (34) able to create an air film for cooling the area downstream of the through-part (28), **characterized in that** the inner surface of said at least one wall (3) includes two tongues (31a, 31b) extending substantially parallel to each other, able to generate an air film for cooling said at least one wall (3), the through-part (28) being located between both tongues (31a, 31b).

2. The combustion chamber according to claim 1, **characterised in that** said at least one opening (34) of the through-part (28) corresponds to a slot made on the surface of the through-part especially of an oblong shape.

3. The combustion chamber according to claim 1 or 2, **characterised in that** said at least one opening (34) of the through-part (28) extends longitudinally along the annular edge of the through-part (28), especially over at least one quarter of the annular edge of the through-part (28).

4. The combustion chamber according to one of the previous claims, **characterised in that** said at least one opening (34) of the through-part (28) is formed substantially at the radially inner end (28a) of the through-part (28).

5. The combustion chamber according to any of the previous claims, **characterized in that** said at least one opening (34) of the through-part (28) extends substantially parallel to the direction of the cooling air flow supplying it.

6. The combustion chamber according to any of the previous claims, **characterised in that** said at least one wall comprises the radially outer annular wall (3) of the combustion chamber (1).

7. The combustion chamber according to any of the previous claims, **characterised in that** said at least one wall comprises the radially inner annular wall (2) of the combustion chamber (1).

8. The combustion chamber according to any of the previous claims, **characterised in that** said at least one wall comprises the chamber bottom annular wall (4) of the combustion chamber (1).

9. The combustion chamber according to any of the previous claims, **characterised in that** said at least one wall (3) comprises a plurality of micro-perforations (33) to enable an inlet of cooling air in the combustion chamber (1) for cooling said at least one wall (3).

10. The combustion chamber according to any of the previous claims, **characterised in that** said through-part (28) is a cooling bushing (28) for a spark plug (29).

11. A turbine engine (10), **characterised in that** it comprises a compressor (12), especially a high pressure compressor, and a combustion chamber (1) according to any of the previous claims, disposed in an annular enclosure (20, 21, 22) arranged at the outlet of the compressor (12), and in which a portion (19) of an air flow coming from the compressor (12) is intended to bypass the combustion chamber (1) along said at least one wall (3).
